# EUROPÄISCHE PATENTSCHRIFT

(11) **EP 1 929 329 B1**
(45) Veröffentlichungstag und Bekanntmachung des Hinweises auf die Patenterteilung: **06.04.2011**
(21) Anmeldenummer: 06777948.8
(22) Anmeldetag: 25.07.2006
(51) Int. Cl.: G01S 7/481, G01S 17/08

(54) **ELEKTRO-OPTISCHES MESSGERÄT**
ELECTROOPTICAL MEASURING DEVICE
DISPOSITIF DE MESURE ELECTRO-OPTIQUE

(30) Priorität: 05.09.2005 DE 102005041980
(43) Veröffentlichungstag der Anmeldung: 11.06.2008
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); STIERLE, Joerg, 71111 Waldenbuch (DE); WOLF, Peter, 70771 Leinfelden-Echterdingen (DE); RENZ, Kai, 70771 Leinfelden-Echterdingen (DE)
(86) Internationale Anmeldenummer: PCT/EP2006/064614
(87) Internationale Veröffentlichungsnummer: WO 2007/028667

(56) Entgegenhaltungen:
- EP-A- 1 006 368
- WO-A-03/046604
- DE-A1- 10 308 085
- DE-A1- 19 902 523
- DE-U1- 20 120 593
- US-A1- 2003 123 868

## Beschreibung

### Stand der Technik

Elektro-optische Messgeräte, die einen optischen Sendepfad mit zumindest einem optischen Sender sowie einen optischen Empfangspfad mit zumindest einer Empfangsoptik aufweisen, erfordern ein erhöhtes Maß an mechanischer und thermischer Stabilität, um sicher zu stellen, dass die optischen Achsen von beispielsweise Sende- und Empfangspfad in einmal justierter Weise zueinander verlaufen.

Aus der DE 19804050 A1 ist eine Vorrichtung zur optischen Distanzmessung bekannt, bei der die Sendeeinrichtung, die Empfangsoptik und ein Wandler für das Messsignal eine gemeinsame Baueinheit bilden, die in einem Gehäuse des Distanzmessgeräts integriert sind. Die Baueinheit umfasst einen Trägerkörper, der aus Zink-Druckguss hergestellt ist. Der Trägerkörper des Messgeräts der DE 19804050 A1 ist überwiegend plattenförmig ausgebildet und weist auf einer dem zu vermessenden Objekt zugewandten Seite einen Rahmen auf, der über zwei seitliche Rippen am Rahmenkörper abgestützt ist. Der Austrittskanal der optischen Vorrichtung dieses Distanzmessgeräts ist fest auf dem Trägerkörper montiert. Hierzu sind am Austrittskanal Laschen angeformt, über die der Austrittskanal mittels Schrauben mit dem Trägerkörper verschraubt werden kann. Der Austrittskanal, der aus Kunststoff hergestellt ist, bildet an seiner Außenwandung eine Aufnahme für einen elektro-optischen Wandler.

Aus der DE 10157378 A1 ist ein Messgerät zur berührungslosen Abstandmessung bekannt, das einen optischen Sendepfad mit einem optischen Sender und einen optischen Empfangspfad mit einer Empfängeroptik und einem optischen Empfänger sowie ein diese Komponenten von Sende- und Empfangsmodul aufnehmendes Gerätemodul aufweist. Zur Beibehaltung einer hohen Messgenauigkeit über den gesamten Temperaturbereich sind die Komponenten von Sende- und Empfangspfad so platziert, dass bei einer temperaturbedingten Krümmung des Gerätemoduls in Richtung der optischen Achsen von Sende- und Empfangspfad die optischen Achsen um den gleichen Betrag in die gleiche Richtung ausgelenkt werden.

### Vorteile der Erfindung

Das erfindungsgemäße elektro-optische Messgerät weist einen optischen Sendepfad mit zumindest einem optischen Sender zu Aussendung eines Messsignals sowie einen Empfangspfad mit zumindest einer Empfangsoptik zur Bündelung eines Messsignals in Richtung auf einen Empfänger auf. Des Weiteren besitzt das elektro-optische Messgerät einen Optik-Trägerkörper, der Komponenten des Sende- und Empfangspfads aufnimmt. Der Optik-Trägerkörper des erfindungsgemäßen elektro-optischen Messgeräts ist dabei in vorteilhafter Weise in Kunststoff ausgebildet.

Die Ausbildung des Optik-Trägerkörpers in Kunststoff ermöglicht die Herstellung eines derartigen Trägerkörpers mit geringeren Toleranzen, so dass die bei Metall-Optik-Trägem oftmals notwendigen spanenden Nachbearbeitung von beispielsweise Druckgussteilen entfallen kann. Darüber hinaus haben Druckgussteile, wie sie in Geräten des Stands der Technik genutzt werden, eine mehr oder weniger metallisch glänzende Oberfläche, was in der Regel einen separaten Kunststofftrichter zur Vermeidung von Sekundärreflektionen, beispielsweise zwischen einer Empfangslinse und dem eigentlichen Empfänger, notwendig macht.

Der in Kunststoff ausgeformte Optik-Trägerkörper kann leicht in gewünschter Weise eingefärbt werden, um derartige Reflektionen von vornherein zu vermeiden.

In vorteilhafter Weise wirkt der Optik-Trägerkörper zusätzlich als elektrisch isolierendes Element, so dass beispielsweise bei der Aufnahme und Befestigung einer Leiterplatte, welche elektronische Bauelemente des Messgeräts trägt, eine sichere Vermeidung von Kurzschlüssen gewährleistet ist. Dies ermöglicht im erfindungsgemäßen elektro-optischen Messgerät deutlich geringere Sicherheitsabstände beispielsweise zwischen dem Optik-Trägerkörper und einer Leiterplatte, die mit wesentlichen elektronischen Bauelementen des Geräts versehen ist. Aufgrund der elektrischen Leitfähigkeit von metallischen Tickträgem, wie sie in Geräten des Stands der Technik verbreitet sind, waren bisher erhöhte Sicherheitsabstände oder Isolationsmittel bei der Befestigung einer solchen Leiterplatte am Optik-Träger notwendig, um eine sichere Vermeidung von Kurzschlüssen zu gewährleisten.

Die erfindungsgemäße Ausformung eines derartigen Optik-Trägerkörpers in Kunststoff ermöglicht darüber hinaus, in einfacher Weise beispielsweise Schnapphaken direkt am Optik-Trägerkörper auszubilden, sodass eine einfache, kostengünstige und montagefreundliche Integration von anderen Bauteilen im und auf dem Optik-Trägerkörper ermöglicht wird.

Durch die in den abhängigen Ansprüchen aufgeführten Merkmale sind vorteilhafte Ausführungsformen und Weiterbildungen des erfindungsgemäßen elektro-optischen Messgeräts möglich.

In vorteilhafter Weise ist der Optik-Trägerkörper des erfindungsgemäßen Messgeräts einstückig ausgebildet. So kann beispielsweise ein derartiges elektro-optisches Messgerät einen Optik-Trägerkörper aufweisen, welcher in Kunststoff-Spritzgusstechnik direkt ausgeformt wird. Dabei können gleichzeitig Befestigungsmittel für optische und elektronische Komponenten direkt mit ausgebildet werden.

Insbesondere ist es möglich, eine Versteifungsstruktur, beispielsweise eine Wabenstruktur einstückig mit dem Optik-Trägerkörper auszubilden, um diesem die erforderliche Steifigkeit zu verleihen.

Dabei ist es vorteilhaft, die Versteifungsstruktur auf einer der mit dem Optik-Trägerkörper zu verbindenden Leiterplatte abgewandten Seite des Optik-Trägerkörpers auszubilden. Auf diese Weise sorgt die Versteifungsstruktur auf einer Flächenseite des Optik-Trägerkörpers für eine erhöhte Stabilität, wahrend die mit dem Optikträger verbundene, beispielsweise verschraubte Leiterplatte auf der gegenüber liegenden Flächenseite für die erhöhte Stabilität der Kunststoffbauteils sorgt.

In einer vorteilhaften Ausführungsform des erfindungsgemäßen Messgeräts ist ein Tubus, welcher beispielsweise zwischen einer Empfangslinse des Messgeräts und einem Empfänger des Messgeräts angeordnet ist, einstückig mit dem Optik-Trägerkörper ausgebildet. Ein derartiger Tubus kann in vorteilhafter Weise direkt in dem Optik-Trägerkörpermaterial ausgebildet werden.

Darüber hinaus ist es in vorteilhafter Weise möglich, auch eine Aufnahme für die Empfangslinse, und / oder eine Aufnahme für ein optisches Filterelement, und / oder eine Aufnahme für ein Display einstückig mit dem Optik-Trägerkörper auszubilden. Derartige Aufnahmen umfassen Auflage- bzw. Anlagepunkte für die mit dem Optik-Trägerkörper zu verbindenden elektro-optischen Komponenten des Messgeräts. So ist es beispielsweise in vorteilhafter Weise möglich, eine genaue Führung für eine Leiterplatte mit elektronischen Komponenten, beispielsweise auch einem elektro-optischen Empfänger, direkt im Optik-Trägerkörper auszubilden, sodass diese Leiterplatte und der mit ihr verbundene elektro-optische Empfänger exakt, beispielsweise in den Brennpunkt einer Empfangslinse, einjustiert werden kann.

Der erfindungsgemäße Kunststoff-Optik-Trägerkörper ermöglicht in vorteilhafter Weise die Realisierung eines kompakten und preiswerten Messgeräts, wie beispielsweise eines elektro-optischen Entfernungsmessers.

Weiter Vorteile des erfindungsgemäßen Messgeräts ergeben sich aus der nachfolgenden Beschreibung eines Ausführungsbeispiels eines solchen Geräts.

### Zeichnung

In der Zeichnung ist ein Ausführungsbeispiel eines erfindungsgemäßen Messgeräts dargestellt, welches in der nachfolgenden Beschreibung näher erläutert werden soll. Die Figuren der Zeichnungen, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen.

Es zeigen:
- Figur 1: ein elektro-optisches Entfernungsmessgerät mit einer Sendeeinheit sowie einer Empfangseinheit in einer perspektivischen Übersichtsdarstellung,
- Figur 2: ein Ausführungsbeispiel des erfindungsgemäßen Optik-Trägers in einer perspektivischen Aufsicht,
- Figur 3: der Optik-Träger gemäß Figur 2 in dazu entgegengesetzter Blickrichtung,
- Figur 4: die zu Figur 3 korrespondierende Unteransicht eines erfindungsgemäßen Optik- Trägers.

### Beschreibung des Ausführungsbeispiels

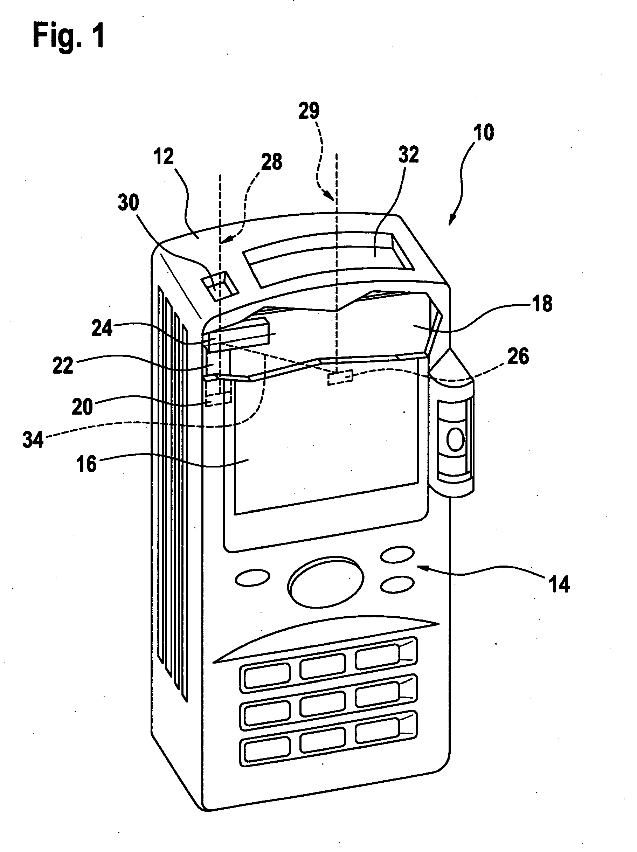

Figur 1 zeigt als ein Entfernungsmessgerät 10 ausgeführtes elektro-optisches Messgerät. Dieses weist ein Gehäuse 12, Betätigungselemente 14 zum Ein- bzw. Ausschalten des Entfernungsmessgeräts 10 sowie zur Starten bzw. Konfigurieren eines Messvorgangs auf. Neben den Bedienelementen 14 besitzt das Messgerät ein Display 16 zur Wiedergabe von Messergebnissen und Angaben des Gerätestatus. Auf einem elektronischen Trägerelement, beispielsweise einer Leiterplatte 18, innerhalb des Gehäuses 12 des Messgeräts 10 sind eine als Laserdiode ausgeführte Sendeeinheit 20 zur Erzeugung eines optischen Sendemesssignals sowie elektronische Komponenten einer Auswerteeinheit angeordnet. Das elektronische Trägerelement 18 ist über Befestigungsmittel, beispielsweise Schrauben, an einem Kunststoff-Optik-Träger befestigt. Der Kunststoff-Optik-Träger weist, in noch zu beschreibender Weise, einen Lichtkanal 22, eine Umlenkeinheit 24 zum Umlenken des Sendemesssignals sowie eine Empfangsoptik zur Bündelung von Messsignalanteilen auf eine Empfangseinheit 26 hin auf Die Sendeeinheit 20, der Lichtkanal 22, die Umlenkeinheit 24 und ein Referenzpfad 34 eines Referenzsignals sind in Figur 1 lediglich schematisch angedeutet.

Zur Messung eines Abstands des Entfernungsmessgeräts 10 zu einem entfernten Gegenstand wird im Betrieb des Messgeräts eine Sendemesssignal von der Sendeeinheit 20 entlang eines Sendepfads 28 ausgesendet. Die Sendemessstrahlung verlässt das Messgerät über ein Fenster 30 im Gehäuse 12 des Geräts. Das von einer Oberfläche eines entfernten, zu vermessenden Gegenstands reflektierte, bzw. gestreute Messsignal wird über ein Fenster 32 zum Teil wieder in das Gehäuse eingekoppelt und mittels einer in Figur 1 nicht dargestellten Empfangsoptik als Empfangsmesssignal von einer Empfangseinheit 26, beispielsweise einer Photodiode, insbesondere einer APD, detektiert. In alternativen Ausführungsformen können das Eintrittfenster in das Messgerät und die Empfangsoptik auch einstückig ausgebildet sein.

Mittels eines zwischen dem Sendemesssignal und dem Empfangsmesssignal durchgeführten Phasenvergleichs des modulierten Messsignals kann auf die Lichtlaufzeit zwischen Sender und Empfänger des Geräts geschlossen werden. Über den bekannten Betrag der Lichtgeschwindigkeit kann somit der gesuchte Abstand des Messgeräts zu dem zu vermessenden Objekt bestimmt werden.

Um Laufzeiten, die vom Abstand des Messgeräts zu einem Objekt unabhängig sind und beispielsweise bei der Erzeugung des Sendemesssignals und / oder bei der Verarbeitung des Empfangsmesssignals im Gerät entstehen, zu berücksichtigen, kann vor einer Entfernungsmessung einer Referenzmessung durchgeführt werden. Hierbei wird das Sendemesssignal von der Umlenkeinheit 24 umgelenkt und über eine bekannte Referenzstrecke entlang des Pfads 34 direkt auf die Empfangseinheit 26 gerichtet.

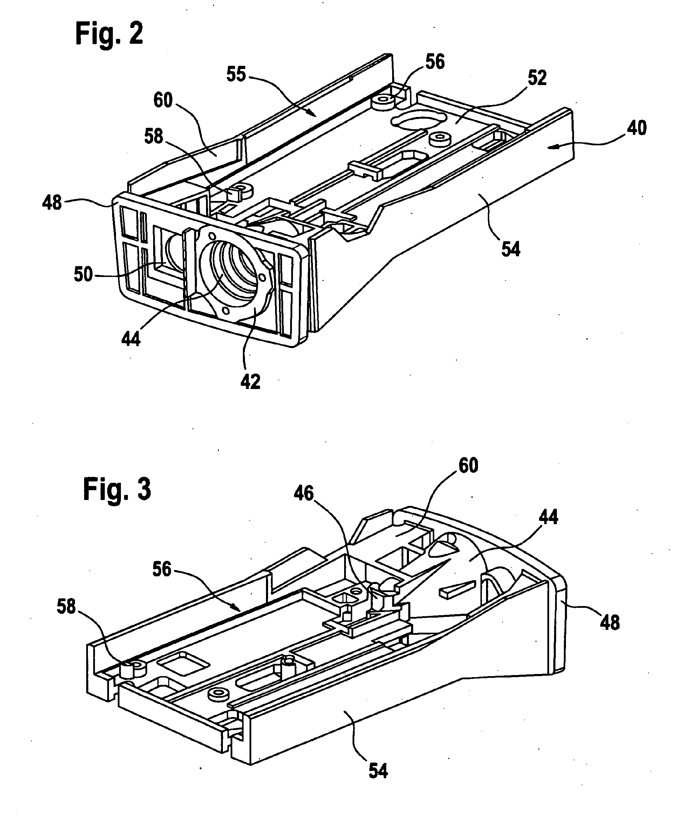

Figur 2 zeigt eine perspektivische Ansicht eines Ausführungsbeispiels eines erfindungsgemäßen Optik-Trägers eines Messgerätes in einer Ansicht entgegen der Messrichtung des Messgerätes. Figur 3 zeigt eine entsprechende perspektivische Ansicht in etwa in Richtung des Messsignals. Der Optik-Träger 40 ist einstückig aus Kunststoff, beispielsweise PPS GF40 oder PBT Glasfaserverstärkt (ab ca. 30%), hochverstärktes PA6, beispielsweise Grivory oder auch PEEK hergestellt. Ein solcher Optik-Träger lässt sich in vorteilhafter Weise in Kunststoff-Spritzgusstechnik direkt ausformen.

Der Optik-Träger weist eine Reihe von Aufnahmen und Befestigungsmittel für optische und / oder elektronische Komponenten des Messgeräts auf. So besitzt der Kunststoff-Optik-Träger 40 in seinem Frontbereich 48 eine Aufnahme 42 für eine Empfangsoptik, die das rücklaufende Empfangsmesssignal auf einen entsprechenden Empfänger bündelt. Einstückig mit dem Optik-Träger 40 ist ein Tubus 44 ausgebildet, der das Empfangsmesssignal gegenüber dem Gehäuseinnenraum des Messgeräts abschottet. Am Ende des Tubus 44 ist eine Aufnahme 46 für einen optischen Filter vorgesehen, der beispielsweise die optischen Messfrequenzen transmittieren lässt, Umgebungs- und Streulicht jedoch blockiert.

Dabei kann das Kunststoffmaterial des Optik-Trägers vorteilhafter Weise so gewählt werden, dass dessen thermische Ausdehnung durch eine entsprechende thermische Brechungsindexänderung der Empfangsoptik kompensiert wird. Hierzu bietet es sich an, die Empfangsoptik ebenfalls in Kunststoff auszuformen.

Des Weiteren weist der erfindungsgemäße Optik-Träger 40 in seinem Frontbereich 48 eine Aufnahme 50 für ein Austrittsfenster des Sendemessstrahls auf.

Der Optik-Träger, der im Wesentlichen plattenförmig ausgebildet ist, weist an seinen beiden gegenüberliegenden Längsseiten, gegenüber der Plattenebene 52 vertikal überstehende Versteifungsrippen 54 auf. Zwischen diesen Versteifungsrippen 54 sind Führungselemente 56 zur Justierung und Befestigung eines elektronischen Trägerelements 18, insbesondere einer Leiterplatte, vorgesehen. Dabei kann das Material und somit der Ausdehnungskoeffizient des Optik-Trägers so gewählt werden, dass die thermische Ausdehnung im wesentlichen der Ausdehnung der Leiterplatte entspricht, so dass es zu keinerlei Verwindungen des Optik-Trägers aufgrund der unterschiedlichen Ausdehnungen der aneinander fixierten Komponenten kommt. Der Frontbereich 48 des Optik-Trägers ist ebenfalls als Versteifungsrahmen ausgebildet, um die notwendig Verwindungssteifigkeit des Kunststoffkörpers zu gewährleisten.

Auf der Leiterplatte befestigt sind, neben elektronischen Komponenten der Ansteuerung sowie der Auswerteeinheit des erfindungsgemäßen Messgeräts auch die als Empfangseinheit dienende Empfangsdiode. Diese vormontierte Baugruppe auf dem elektronischen Trägerelement wird in den Optik-Träger 40 eingeschoben. Da die elektronischen Komponenten inklusive der Empfangsdiode bereits auf dem elektronischen Trägerelement fixiert sind, ist dieser Montageschritt besonders einfach durchzuführen. Mittels axialer Ausrichtung des elektronischen Trägerelements 18 gegenüber dem optischen Träger 40 erfolgt dann lediglich noch eine Anpassung des Abstands der Empfangsoptik zur Empfangsphotodiode dahingehend, dass die als Empfänger dienende Photodiode ungefähr im Brennpunkt der Empfangsoptik platziert ist. Dabei sind an den Versteifungsrippen 54 Anschlagelemente 58 ausgebildet, die eine exakte Verschiebung des elektronischen Trägers 18 inklusive der vormontierten Empfangsphotodiode entlang des Sendepfads ermöglicht.

Neben der Aufnahme und Führung des elektronischen Trägerelements, weist der erfindungsgemäße Kunststoff-Optik-Träger eine Aufnahme 60 für das Display 16 des Messgeräts auf. Insbesondere ist es möglich, dem Kunststoff-Optik-Träger im Bereich der Displayaufnahme 60 eine zweite Kunststoff-Komponente als Softelement direkt beim Fertigungsprozess anzuspritzen, um eine weiche Lagerung des optischen Displays zu gewährleisten.

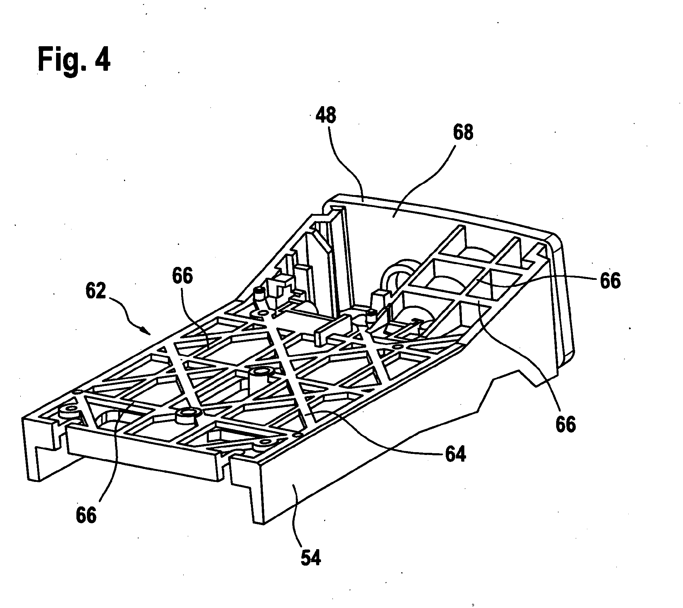

Um die notwendige Stabilität des Kunststoff-Optik-Trägers zu gewährleisten, weist dieser - zusätzlich zu den Versteifungsrippen 54 - auf der, den Führungselementen 56 für den elektronischen Träger abgewandten Seite der Plattenebene 52, eine Versteifungsstruktur 62 auf, wie dies exemplarisch in Figur 4 dargestellt ist. Diese Versteifungsstruktur 62 ist in vorteilhafter Weise wabenförmig, mit diagonal zu den Versteifungsrippen 54 verlaufenden Querversteifungsrippen 64 ausgebildet. Um für das Kunststoff-Spritzteil die erforderliche Stabilität zu garantieren, ist in vorteilhafter Weise eine Doppel-Diagonälstruktur mit zusätzlichen Quer- und Längsstreben 66 bei dem erfindungsgemäßen Optik-Träger ausgebildet worden. Der Optikträger wird somit auf seiner einen Flächenseite durch die Versteifungsstruktur 62 stabilisiert. Auf der gegenüberliegenden Flächenseite des Optik-Trägers 40 sorgt der flächige Elektronik-Träger 18 für eine zusätzliche Stabilisierung, so dass der erfindungsgemäße Optik-Träger trotz des Kunstsloffmaterials eine hohe Stabilität und Verwindungssteifigkeit aufweist. Darüber hinaus trägt der als Rahmen, bzw. Frontplatte 68 ausgebildete Frontbereich 48 zu der hohen Versteifungsfestigkeit des Kunststoff-Optik-Trägers 40 bei.

In vorteilhafter Weise weist der Kunststoff-Optik-Träger zudem eine Einfärbung auf, die zu einer Unterdrückung von Sekundärreflektionen zwischen der Empfangsoptik und der Empfangsphotodiode führt. Dazu kann das Kunststoffmaterial bereits im Rohzustand, d.h. vor der Ausformung des Optik-Trägers eingefärbt werden. Eine nachträgliche dunkle und matte Lackierung, die bei metallischen Druckgussteilen erforderlich ist, kann auf diese Weise bei dem erfindungsgemäßen Kunststoff-Optik-Träger vermieden werden.

In vorteilhafter Weise kann bei dem erfindungsgemäßen Messgerät auf eine elektronische Abschirmung der elektrischen Komponenten und insbesondere der Empfangsdiode verzichtet werden. Dies ermöglicht erst die Ausbildung des Optik-Trägers in Kunststoffmaterial. Ein Metallkäfig zur elektromagnetischen Abschirmung von elektronischen Komponenten ist nicht erforderlich. Bei der erfindungsgemäßen Ausführung ermöglicht die gezielte Anordnung der elektronischen Bauteile, eine differenzielle Modulation der Empfängerdiode, wie sie in der DE 102 35 562 A1 beschrieben ist, den Verzicht auf eine elektromagnetische Abschirmung der elektronischen Komponenten. Gegebenenfalls kann bei dem erfindungsgemäßen Kunststoff-Optik-Träger die Verwendung eines lokalen Abschirmelements, beispielsweise eines kleinen, automatisch bestückbaren Abschirmbleches, vorgesehen sein, wenn dies durch spezielle Anforderungen an das Messgerät notwendig werden sollte.

Der erfindungsgemäße Kunststoff-Optik-Träger ermöglicht die Realisierung eines kompakten, insbesondere handgehaltenen Messgeräts, wie beispielsweise eines Laserentfernungsmessgeräts, und stellt insbesondere im Bezug auf die Herstellungskosten, die Größe des Geräts sowie dessen Gewicht einen deutlichen Fortschritt gegenüber den bekannten Geräten des Stands der Technik dar. Insbesondere kann der erfindungsgemäße Kunststoff-Optik-Träger mit bereits montiertem Elektronikträger in das Gehäuse eines Messgeräts eingeschoben werden, sodass sich das erfindungsgemäße Messgerät in einfachen, maschinentauglichen Verfahrensschritten produzieren lässt.

Das erfindungsgemäße Messgerät ist nicht auf die in der Beschreibung dargelegte Ausführungsform beschränkt.

## Patentansprüche

1. Handgehaltenes Laserentfemungsmessgerät (10) zur berührungslosen Abstandsmessung, mit einen Gehäuse und mit einem optischen Sendepfad (28), der zumindest einen optischen Sender (20) zur Aussendung eines Messsignals aufweist, sowie mit einem Empfangspfad (29) mit zumindest einer Empfangsoptik zur Bündelung eines Messsignals in Richtung auf einen Empfänger (26), wobei eine als optischer Sender (20) ausgeführte Laserdiode sowie elektronische Komponenten einer Auswerteeinheit auf einem elektronische Trägerelement (18) innerhalb des Gehäuses angeordnet sind, sowie mit einem, Komponenten von Sende- und Empfangspfad aufnehmenden Optikträger (40), wobei der Optik-Träger (40) aus Kunststoff ausgebildet ist, und zumindest ein Führungselement (56) zur Justierung und Befestigung des elektronischen Trägerelements (18) einstückig mit dem Optik-Träger (40) ausgebildet ist.

2. Messgerät nach Anspruch 1, **dadurch gekennzeichnet, dass** der Optik-Träger (40) einstückig ausgebildet ist.

3. Messgerät nach Anspruch 1 oder 2, **dadurch gekennzeichnet, dass** eine Versteifungsstruktur (62), einstückig mit dem Optik-Träger (40) ausgebildet ist.

4. Messgerät nach Anspruch 1, **dadurch gekennzeichnet, dass** das Führungselement (56) und eine Aufnahme (58) für die elektrische Leiterplatte (18) auf einer der Versteifungsstruktur (62) abgekehrten Seite des Optik-Träger (40) ausgeformt sind.

5. Messgerät nach zumindest einem der Ansprüche 1, 2 oder 3, **dadurch gekennzeichnet, dass** ein zwischen Empfangsoptik und Empfänger (26) angeordneter Tubus (44) einstückig mit dem Optik-Träger (40) ausgebildet ist.

6. Messgerät nach zumindest einem der Ansprüche 1, 2 oder 3, **dadurch gekennzeichnet, dass** eine Aufnahme (42) für die Empfangsoptik einstückig mit dem Optik-Träger (40) ausgebildet ist.

7. Messgerät nach zumindest einem der Ansprüche 1, 2 oder 3, **dadurch gekennzeichnet, dass** eine Aufnahme (46) für ein Filterelement einstückig mit dem Optik-Träger (40) ausgebildet ist.

8. Messgerät nach zumindest einem der Ansprüche 1, 2 oder 3, **dadurch gekennzeichnet, dass** eine Aufnahme (60) für ein Display (16) einstückig mit dem Optik-Träger (40) ausgebildet ist.

9. Verfahren zur Herstellung eines handgehaltenen Laserentfernungsmessgerätes, insbesondere nach einem der Ansprüche 1 bis 8, zur berührungslosen Abstandsmessung,
wobei ein Gehäuse und ein optischer Sendepfad, der zumindest einen optischen Sender (20) zur Aussendung eines Messsignals aufweist, sowie ein Empfangspfad (29) mit zumindest einer Empfangsoptik zur Bündelung eines Messsignals in Richtung auf einen Empfänger (26) vorgesehen wird;
wobei eine als optischer Sender (20) ausgeführte Laserdiode sowie elektronische Komponenten einer Auswerteeinheit auf dem elektronischen Trägerelement (18) innerhalb des Gehäuses angeordnet wird;
wobei ein Komponenten von Sende- und Empfangspfad aufnehmenden Optikträger (40) vorgesehen wird und der Optikträger (40) in Kunststoffspritzguss-Technik ausgeformt wird;
wobei zumindest ein Führungselement (56) zur Justierung und Befestigung des elektronischen Trägerelements (18) einstückig mit dem Optikträger (40) ausgebildet wird und das elektronische Trägerelement (18), insbesondere eine elektrische Leiterplatte, zunächst mit dem Optik-Trägerkörper (40) verbunden wird und dann gemeinsam mit diesem in ein Gehäuse (12) des Messgerätes eingebracht wird.

## Claims

1. Hand-held laser distance measuring device (10) for contactless distance measurement, comprising a housing and comprising an optical transmission path (28) which has at least one optical transmitter (20) for emitting a measuring signal, and comprising a reception path (29) with at least one receiving optics for focusing a measuring signal in the direction of a receiver (26), a laser diode designed as optical transmitter (20), and electronic components of an evaluation unit being arranged on an electronic carrier element (18) inside the housing, and comprising an optics carrier (40) accommodating components of the transmission and reception paths, the optics carrier (40) being constructed from plastic, and at least one guide element (56) for adjusting and fastening the electronic carrier element (18) being integrally formed with the optics carrier (40).

2. Measuring device according to Claim 1, **characterized in that** the optics carrier (40) is integrally formed.

3. Measuring device according to Claim 1 or 2, **characterized in that** a reinforcement structure (62) is integrally formed with the optics carrier (40).

4. Measuring device according to Claim 1, **characterized in that** the guide element (56) and a holder (58) for the electric printed circuit board (18) are formed on a side of the optics carrier (40) averted from the reinforcement structure (62).

5. Measuring device according to at least one of Claims 1, 2 or 3, **characterized in that** a tube (44) arranged between the reception optics and receiver (26) is integrally formed with the optics carrier (40).

6. Measuring device according to at least one of Claims 1, 2 or 3, **characterized in that** a holder (42) for the receiving optics is integrally formed with the optics carrier (40).

7. Measuring device according to at least one of Claims 1, 2 or 3, **characterized in that** a holder (46) for a filter element is integrally formed with the optics carrier (40).

8. Measuring device according to at least one of Claims 1, 2 or 3, **characterized in that** a holder (60) for a display (16) is integrally formed with the optics carrier (40).

9. Method for producing a hand-held laser distance measuring device, in particular according to one of Claims 1 to 8, for contactless distance measurement,
in which there are provided a housing and an optical transmission path which has at least one optical transmitter (20) for emitting a measuring signal, and a reception path (29) with at least one receiving optics for focusing a measuring signal in the direction of a receiver (26);
a laser diode designed as optical transmitter (20), and electronic components of an evaluation unit being arranged on the electronic carrier element (18) inside the housing;
an optics carrier (40) accommodating components of the transmission and reception paths being provided, and the optics carrier (40) being formed using plastic injection moulding technology; and at least one guide element (56) for adjusting and fastening the electronic carrier element (18) being integrally formed with the optics carrier (40), and the electronic carrier element (18), in particular an electric printed circuit board, firstly being connected to the optics carrier body (40) and then being introduced together with the latter into a housing (12) of the measuring device.

## Revendications

1. Appareil manuel (10) de mesure de distance par laser, destiné à mesurer des distances sans contact, qui présente
un boîtier et un parcours optique d'émission (28) doté d'au moins un émetteur optique (20) qui émet un signal de mesure,
ainsi qu'un parcours de réception (29) doté d'au moins une optique de réception qui concentre un signal de mesure en direction d'un récepteur (26),
une diode laser configurée comme émetteur optique (20) ainsi que des composants électroniques d'une unité d'évaluation qui sont disposés sur un élément électronique de support (18) prévu à l'intérieur du boîtier,
ainsi qu'un porte-optique (40) qui reprend des composants du parcours d'émission et du parcours de réception, le porte-optique (40) étant réalisé en matière synthétique,
au moins un élément de guidage (56) qui permet d'ajuster et de fixer l'élément électronique de support (18) qui est formé d'un seul tenant avec le porte-optique (40).

2. Appareil de mesure selon la revendication 1, **caractérisé en ce que** le porte-optique (401) est réalisé d'une seule pièce.

3. Appareil de mesure selon la revendication 1 ou 2, **caractérisé en ce qu'**une structure de renfort (62) est formée d'un seul tenant avec le porte-optique (40).

4. Appareil de mesure selon la revendication 1, **caractérisé en ce que** l'élément de guidage (56) et un logement (58) de la carte de circuit électrique (18) sont formés sur un côté du porte-optique (40) non tourné vers la structure de renfort (62).

5. Appareil de mesure selon au moins l'une des revendications 1, 2 ou 3, **caractérisé en ce qu'**un tube (44) disposé entre l'optique de réception et le récepteur (26) est formé d'un seul tenant avec le porte-optique (40).

6. Appareil de mesure selon au moins l'une des revendications 1, 2 ou 3, **caractérisé en ce qu'**un logement (42) de l'optique de réception est formé d'un seul tenant avec le porte-optique (40).

7. Appareil de mesure selon au moins l'une des revendications 1, 2 ou 3, **caractérisé en ce qu'**un logement (46) pour un élément de filtrage est formé d'un seul tenant avec le porte-optique (40).

8. Appareil de mesure selon au moins l'une des revendications 1, 2 ou 3, **caractérisé en ce qu'**un logement (60) pour un affichage (16) est formé d'un seul tenant avec le porte-optique (40).

9. Procédé de fabrication d'un appareil manuel de mesure de distance par laser, en particulier selon l'une des revendications 1 à 8, destiné à mesurer des distances sans contact,
dans lequel un boîtier et un parcours optique d'émission qui présentent au moins un émetteur (20) qui émet un signal de mesure ainsi qu'un parcours de réception (29) qui présente au moins une optique de réception qui concentre un signal de mesure en direction d'un récepteur (26) sont prévus,
une diode laser configurée comme émetteur optique (20) ainsi que des composants électroniques d'une unité d'évaluation étant disposés à l'intérieur du boîtier sur l'élément électronique de support (18),
un porte-optique (40) reprenant des composants du parcours d'émission et du parcours de réception étant prévus et le porte-optique (40) étant formé par une technique de moulage de matière synthétique par injection,
au moins un élément de guidage (56) qui permet d'ajuster et de fixer l'élément électronique de support (18) étant formé d'un seul tenant avec le porte-optique (40) et
l'élément électronique de support (18), en particulier une carte de circuit électrique, étant d'abord relié au corps (40) du porte-optique et ensuite placé avec ce dernier dans un boîtier (12) de l'appareil de mesure.
